# FASCICULE DE BREVET EUROPEEN

(11) **EP 1 251 388 B1**
(45) Date de publication et mention de la délivrance du brevet: **21.12.2005**
(21) Numéro de dépôt: 02290357.9
(22) Date de dépôt: 13.02.2002
(51) Int. Cl.: G02C 11/02, G02C 1/08

(54) **Lunettes à monture transformable**
Brille mit veränderbarem Gestell
Spectacles with changeable frame

(30) Priorité: 19.04.2001 FR 0105418
(43) Date de publication de la demande: 23.10.2002
(73) Titulaire: Tand'm S.a.r.l., 39800 Poligny (FR)
(72) Inventeur: Charmoille, Patricia, 25000 Besançon (FR)
(74) Mandataire: Bentz, Jean-Paul

(56) Documents cités:
- EP-A- 0 495 768
- DE-A- 1 772 401
- DE-A- 2 852 199
- DE-U- 20 022 040
- DE-U- 29 509 356
- GB-A- 2 199 155
- US-A- 4 919 530
- US-A- 5 098 180

## Description

La présente invention concerne une paire de lunettes constituée par deux verres soutenus par une monture comprenant deux branches latérales reliées entre elles par une face, au centre de laquelle est formé un nez.

Il est déjà connu des moyens de transformation de l'aspect de cette monture, de manière telle qu'avec une même paire de lunettes, on puisse transformer son apparence, à l'aide d'une monture différente à rapporter sur la monture de base.

Pour cela, il est connu de disposer d'au moins une face complète, de couleur différente, à rapporter sur la monture d'origine afin de changer l'aspect de celle-ci.

Un inconvénient réside dans le fait qu'une telle face amovible doit avoir une forme identique à la monture d'origine, car cette dernière se loge en fait dans des gorges internes de la monture optionnelle, par encliquetage élastique.

Dans de telles conditions, on comprend bien que, seule la couleur peut être changée, la forme ne pouvant l'être en aucun cas.

Dès lors, les transformations d'aspect sont très limitées.

Sont connus dans l'art antérieur les brevets US 5 098 180 et DE 200 22 040, qui permettent de rendre interchangeables les verres, mais en aucun cas, ces documents enseignent de modifier l'aspect des lunettes en changeant certains éléments par rapport à une monture de base, qui demeure toujours la même, mais sur laquelle on rapporte des éléments de décor amovibles.

La présente invention a pour but de permettre une transformation d'aspect des lunettes sans modifier la monture de base, et ceci d'une manière simple et aisée. Elle concerne à cet effet des lunettes constituées par deux verres soutenus par une monture de base comprenant deux branches latérales reliées entre elles par une face, au centre de laquelle est formé un pont de nez, et comportant des moyens de transformation de l'aspect de la monture qui sont constitués par au moins une demi face inférieure amovible de différentes formes, choisie par l'utilisateur dans une gamme prédéterminée, et s'adaptant sur une même monture de base, la dite demi face comportant deux points de fixation latéraux, constitués d'une part par deux lumières réalisées dans le sens longitudinal, aux deux extrémités libres de ladite demi face, et d'autre part par deux pions correspondants réalisés aux extrémités de la demi face supérieure fixe, de manière à assurer une retenue dans le sens longitudinal et transversal.

La présente invention concerne également les caractéristiques qui ressortiront au cours de la description qui va suivre, et qui devront être considérées isolément ou selon toutes leurs combinaisons techniques possibles.

Cette description donnée à titre d'exemple, non limitatif, fera mieux comprendre comment l'invention peut être réalisée en référence aux dessins annexés sur lesquels :
La figure 1 représente en vue arrière, une paire de lunettes selon l'invention assortie d'une demi face inférieure amovible, en cours de montage.
La figure 2 est une vue de dessus selon la figure 1, avant montage de la demi face inférieure amovible.
Les figures 3 à 9 représentent en vue avant, des variantes de réalisation de la demi face inférieure amovible comportant les moyens selon l'invention.

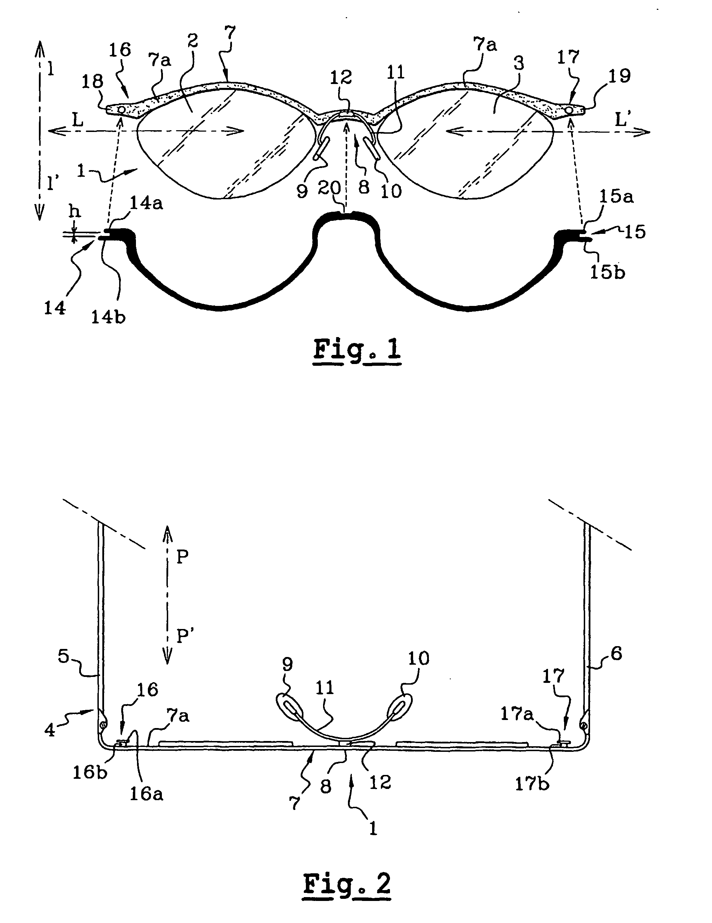

La paire de lunettes 1 représentée sur les figures 1 et 2 est constituée de manière connue par deux verres 2 et 3 soutenus par une monture 4 comprenant deux branches latérales 5 et 6 reliées entre elles par une face 7 au centre de laquelle est formé un nez 8.

Selon le présent exemple de réalisation, le nez est formé par deux plaquettes latérales 9 et 10 soutenues par un porte plaquette 11 lui-même rapporté sur le milieu de la face 7 par l'intermédiaire d'un pied 12.

Bien entendu, d'autres modèles de lunettes peuvent être concernés, ayant des plaquettes rapportées directement sur la monture entourant les verres.

Selon le présent exemple de réalisation de l'invention, les lunettes 1, représentées sur les figures 1 et 2 comportent des moyens de transformation de l'aspect de la monture. Ceux-ci sont constitués par au moins une demi face inférieure amovible 13 de différentes formes, choisie par l'utilisateur dans une gamme prédéterminée, la dite demi face inférieure amovible 13 comportant deux points de fixation latéraux 14 et 15 susceptibles de coopérer avec deux points de fixation complémentaires 16 et 17 d'une demi face supérieure fixe 7.

Selon une autre caractéristique de l'invention, les points de fixation latéraux 14 et 15 de la demi face inférieure amovible 13 sont constitués d'une part par deux lumières réalisées dans le sens longitudinal LL', aux deux extrémités libres de ladite demi face 13, et d'autre part par deux pions correspondants réalisés aux extrémités 18 et 19 de la demi face supérieure fixe 7, de manière à assurer une retenue dans le sens longitudinal LL' et transversal 11'.

Selon l'exemple de réalisation représentée sur la figure 1, les lumières réalisées aux extrémités libres de la demi face inférieure amovible 13 sont constituées par deux encoches ouvertes, engagées sur les deux pions correspondants 16 et 17 de la demi face supérieure fixe 7 en exerçant d'abord une compression manuelle sur la demi face inférieure amovible 13, par déformation élastique de celle-ci dans le sens longitudinal LL', de manière à permettre l'introduction des pions 16 et 17 dans les lumières 14 et 15, puis l'expansion de la dite demi face inférieure 13 en relachant l'effort, ceci ayant pour effet de provoquer un verrouillage effectif des pions 16 et 17 au fond des lumières 14 et 15, par retour élastique.

Toujours selon ce mode de réalisation, les pions réalisés sur les extrémités 18 et 19 de la demi face supérieure fixe 7 sont évasés à leur extrémité libre de manière à constituer un bourrelet périphérique de retenue 16a, 17a de la demi face amovible 13 dans le sens de la profondeur PP', la hauteur « h » desdites encoches 14 et 15 étant sensiblement égale au diamètre du corps 16b, 17b des pions correspondants 16 et 17.

Selon une autre caractéristique de l'invention, chacune des encoches 14 et 15 de la demi face inférieure amovible 13 est délimitée par un becquet supérieur 14a, 15a et par un becquet inférieur 14b, 15b, parallèles entre eux, le becquet inférieur 14b ou 15b étant de longueur supérieure à la longueur du becquet supérieur 14a ou 15a, de manière à constituer une butée de positionnement dans le sens transversal 11' lors du montage.

Comme le montre également les figures, selon une autre caractéristique de l'invention, la demi face inférieure amovible 13 comprend en outre un troisième point de fixation 20 réalisé dans sa partie centrale au niveau du nez 8 et constitué par une encoche ouverte vers le haut dans le sens transversal 11' de ladite demi face inférieure amovible 13 et de dimensions la rendant apte à coopérer à la manière d'une fourche avec un pion central 12, perpendiculaire à la demi face supérieure 7.

En fait, selon le présent exemple d'application, le pion central 12 est constitué par un pied sur lequel est fixé un arceau porte plaquette 11 s'ajustant sur le nez d'un utilisateur, de manière que l'encoche centrale 20 de la demi-face inférieure amovible 13 soit retenue sur le pied 12, à la fois dans le sens longitudinal LL' et dans le sens de la profondeur PP'.

Selon une autre caractéristique de l'invention, les points de fixation latéraux 14-16, 15-17 et/ou central 12-20 de la demi face supérieure fixe 7 sont disposés sur la face interne 7a de celle-ci, de manière, d'une part à les rendre discret, et d'autre part à permettre la transformation de l'apparence desdites lunettes, par adjonction de ladite face inférieure amovible 13, en soulignant la partie inférieure des verres 2, 3, uniquement dans le prolongement de la demi face supérieure fixe 7, les points de fixation 14 et 15 et la zone correspondante du nez 8, de la demi face inférieure 13, étant cachées derrière les parties correspondantes de la demi face supérieure fixe 7.

Selon une variante de réalisation non représentée les points de fixation de la demi face inférieure amovible 13, par rapport à la demi face supérieure fixe 7 sont respectivement constitués par des trous circulaires et des pions de dimensions telles à permettre un encliquetage élastique à la manière de boutons-pression.

Selon un autre mode de réalisation non représenté les points de fixation de la demi face inférieure amovible 13 par rapport à la demi face supérieure fixe 7 sont constitués par des éléments magnétiques.

Selon un autre mode de réalisation non représenté les points de fixation de la demi face inférieure amovible 13 par rapport à la demi face supérieure fixe 7 sont constitués par des moyens auto-agrippants formés d'une part de crochets et d'autre part de boucles.

Selon un exemple préféré de réalisation, la demi face inférieure amovible 13 est réalisée en un fil métallique.

Bien entendu, elle pourrait également être réalisée par moulage d'une matière plastique.

Il en est de même pour la section de cette demi face inférieure amovible 13, qui peut être de toute forme, c'est à dire, rectangulaire, carré, circulaire etc..

Préférentiellement, la matière de la demi face inférieure amovible 13 est traitée en surface, de manière à ne pas rayer les verres.

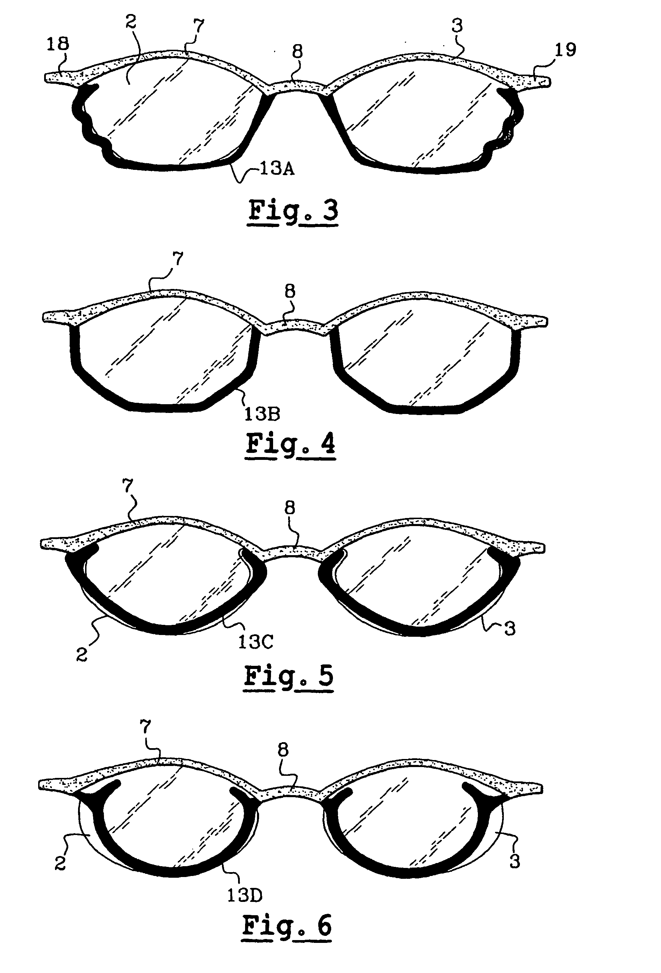

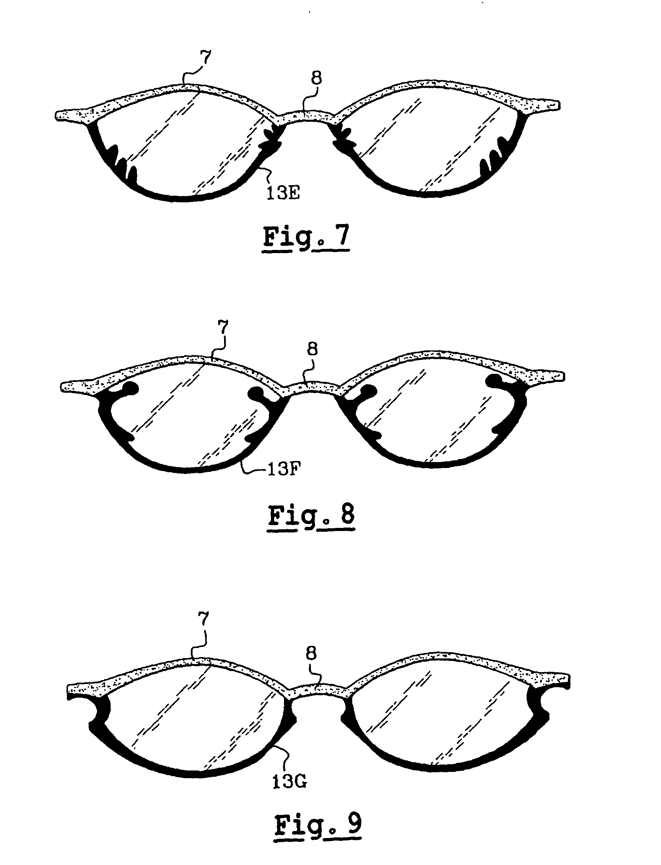

Comme on l'a compris, l'avantage majeur procuré par l'invention est de pouvoir adapter, une vaste collection de demi-faces inférieures amovibles 13 A à 13 G, comme le montre les figures 3 à 9, à partir d'une même base, à savoir, les lunettes désignées globalement sur les figures 1 et 2.

Le consommateur y trouvera également un avantage, par le fait qu'il peut faire sa propre combinaison et la changer ensuite sans changer sa paire de lunettes.

Un avantage technique procuré par les moyens de transformation selon l'invention, réside dans le fait qu'ils permettent de préserver un grand champ de vision en utilisation professionnelle, par exemple, tout en offrant une possibilité de fantaisie pour les loisirs.

## Revendications

1. Lunettes constituées par deux verres (2 et 3) soutenus par une monture de base (4) comprenant deux branches latérales (5, 6) reliées entre elles par une face, au centre de laquelle est formé un pont de nez (8), et comportant des moyens de transformation de l'aspect de la monture qui sont constitués par au moins une demi face inférieure amovible (13) de différentes formes, choisie par l'utilisateur dans une gamme prédéterminée, et s'adaptant sur une même monture de base, la dite demi face (13) comportant deux points de fixation latéraux (14 et 15), constitués d'une part par deux lumières réalisées dans le sens longitudinal (LL'), aux deux extrémités libres de ladite demi face (13), et d'autre part par deux pions correspondants réalisés aux extrémités (18 et 19) de la demi face supérieure fixe (7), de manière à assurer une retenue dans le sens longitudinal (LL') et transversal (11').

2. Lunettes selon la revendication 1, **caractérisées en ce que** les lumières (14 et 15) réalisées aux extrémités libres de la demi face inférieure amovible (13) sont constituées par deux encoches ouvertes, engagées sur les deux pions correspondants (16 et 17) de la demi face supérieure fixe (7) en exerçant d'abord une compression manuelle sur la demi face inférieure amovible (13), par déformation élastique de celle-ci dans le sens longitudinal (LL'), de manière à permettre l'introduction des pions (16 et 17) dans les lumières (14 et 15), puis l'expension de la dite demi face inférieure (13) en relachant l'effort, ceci ayant pour effet de provoquer un verrouillage effectif des pions (16 et 17) au fond des lumières (14 et 15), par retour élastique.

3. Lunettes selon la revendication 2, **caractérisées en ce que** les pions (16 et 17) réalisés sur les extrémités (18 et 19) de la demi face supérieure fixe (7) sont évasés à leur extrémité libre de manière à constituer un bourrelet périphérique de retenue (16a, 17a) de la demi face amovible (13) dans le sens de la profondeur (PP'), la hauteur (h) desdites encoches (14 et 15) étant sensiblement égale au diamètre du corps (16b, 17b) des pions correspondants (16 et 17)

4. Lunettes selon l'une des revendications 2 ou 3, **caractérisées en ce que** chacune des encoches (14 et 15) de la demi face inférieure amovible (13) est délimitée par un becquet supérieur (14a, 15a) et par un becquet inférieur (14b, 15b), parallèles entre eux, le becquet inférieur (14b, 15b) étant de longueur supérieure à la longueur du becquet supérieur (14a, 15a), de manière à constituer une butée de positionnement dans le sens transversal (11') lors du montage.

5. Lunettes selon l'une des revendications 1 à 4, **caractérisées en ce que** la demi face inférieure amovible (13) comprend en outre un troisième point de fixation (20) réalisé dans sa partie centrale au niveau du nez (8) et constitué par une encoche ouverte dans le sens transversal (11') de ladite demi face inférieure amovible (13) et de dimensions la rendant apte à coopérer à la manière d'une fourche avec un pion central (12), perpendiculaire à la demi face supérieure (7).

6. Lunettes selon la revendication 5, **caractérisées en ce que** le pion central (12) est constitué par un pied sur lequel est fixé un arceau porte plaquette (11) s'ajustant sur le nez d'un utilisateur, de manière que l'encoche centrale (20) de la demi-face inférieure amovible (13) soit retenue sur le pied (12), à la fois dans le sens longitudinal (LL') et dans le sens de la profondeur (PP')

7. Lunettes selon l'une des revendications 1 à 6, **caractérisées en ce que** les points de fixation latéraux (14-16, 15-17) et/ou central (12-20) de la demi face supérieure fixe (7) sont disposés sur la face interne (7a) de celle-ci, de manière, d'une part à les rendre discret, et d'autre part à permettre la transformation de l'apparence desdites lunettes, par adjonction de ladite face inférieure amovible (13), en soulignant la partie inférieure des verres (2, 3), uniquement dans le prolongement de la demi face supérieure fixe (7), les points de fixation (14 et 15) et la zone correspondante du nez (20), de la demi face inférieure (13), étant cachées derrière les parties correspondantes de la demi face supérieure fixe (7)

8. Lunettes selon la revendication 1, **caractérisées en ce que** les points de fixation de la demi face inférieure amovible (13), par rapport à la demi face supérieure fixe (7) sont respectivement constitués par des trous circulaires et des pions de dimensions telles à permettre un encliquetage élastique à la manière de boutons-pression.

## Patentansprüche

1. Brille mit zwei Brillengläsern (2 und 3), die durch ein Grundgestell (4) gehalten sind, das zwei laterale Seitenbügel (5, 6) umfaßt, die durch ein Vorderteil miteinander verbunden sind, an dessen Mitte eine Nasenbrücke (8) ausgebildet ist und das eine Einrichtung zum Ändern der Erscheinungsform des Gestells umfaßt, welche Einrichtung durch wenigstens ein bewegliches, unteres Vorderhalbstück (13) unterschiedlicher Form gebildet ist, das von einem Nutzer aus einer vorbestimmten Produktpalette gewählt ist und an das gleiche Grundgestell anpaßbar ist, wobei das Vorderhalbstück (13) zwei laterale Befestigungsstellen (14 und 15) umfaßt, die einerseits durch zwei Löcher, die in Längsrichtung (LL') an zwei freien Enden des Vorderhalbstücks (13) eingebracht sind, und andererseits durch zwei entsprechende Vorsprünge gebildet sind, die an den Enden (18 und 19) des oberen, ortsfesten Vorderhalbstücks (7) realisiert sind, um einen Halt in Längsrichtung (LL') und Querrichtung (11') bereitzustellen.

2. Brille nach Anspruch 1, **dadurch gekennzeichnet, daß** die Löcher (14 und 15), die an den freien Enden des beweglichen, unteren Vorderhalbstücks (13) realisiert sind, durch zwei offene Nute gebildet sind, die mit den beiden entsprechenden Vorsprüngen (16 und 17) des ortsfesten, oberen Vorderhalbstücks (7) in Eingriff bringbar sind, wobei zunächst ein manueller Druck dem beweglichen, unteren Vorderhalbstück (13) durch elastische Verformung des letzteren in Längsrichtung (LL') mitgeteilt wird, so daß ein Einführen der Vorsprünge (16 und 17) in die Löcher (14 und 15) zugelassen wird, und anschließend das untere Vorderhalbstück (13) der Belastung nachgebend gedehnt wird, was wegen Rückfederung eine effektive Verriegelung der Vorsprünge (16 und 17) am Grund der Löcher (14 und 15) bewirkt.

3. Brille nach Anspruch 2, **dadurch gekennzeichnet, daß** die Vorsprünge (16 und 17), die an den Enden (18 und 19) des ortsfesten, oberen Vorderhalbstücks (7) realisiert sind, an ihrem freien Ende derart aufgeweitet sind, daß ein umlaufender Wulsthalterand (16a, 17a) an dem beweglichen Vorderhalbstück (13) in Tiefenrichtung (PP') gebildet ist, wobei die Höhe (h) der Nute (14 und 15) im wesentlichen gleich dem Durchmesser des Körpers (16b, 17b) der entsprechenden Vorsprünge (16 und 17) ist.

4. Brille nach Anspruch 2 oder 3, **dadurch gekennzeichnet, daß** jede Nut (14 und 15) des beweglichen, unteren Vorderhalbstücks (13) durch einen oberen Flügel (14a, 15a) und durch einen unteren Flügel (14b, 15b) begrenzt ist, die zueinander parallel sind, wobei der untere Flügel (14b, 15b) länger als der obere Flügel (14a, 15a) ist, so daß ein Positionsanschlag in Querrichtung (11') bei der Montage gebildet ist.

5. Brille nach einem der Ansprüche 1 bis 4, **dadurch gekennzeichnet, daß** das bewegliche, untere Vorderhalbstück (13) unter anderem eine dritte Befestigungsstelle (20) umfaßt, die an dessen Mittelteil auf Höhe der Nase (8) realisiert und durch eine in Querrichtung (11') des beweglichen, unteren Vorderhalbstücks (13) offene Nut gebildet ist, die derart dimensioniert ist, daß sie gabelartig mit einem zentralen, senkrecht zum oberen Vorderhalbstück (7) liegenden Vorsprung (12) zusammenwirken kann.

6. Brille nach Anspruch 5, **dadurch gekennzeichnet, daß** der zentrale Vorsprung (12) durch einen Stiel gebildet ist, an dem ein Plättchen-Tragbogen (11) befestigt ist, der an die Nase eines Benutzers anpaßbar ist, so daß die zentrale Nut (20) des beweglichen, unteren Vorderhalbstücks (13) an dem Stiel (12) sowohl in Längsrichtung (LL') als auch in Tiefenrichtung (PP') gehalten ist.

7. Brille nach einem der Ansprüche 1 bis 6, **dadurch gekennzeichnet, daß** die lateralen Befestigungsstellen (14-16, 15-17) und/oder die zentralen Befestigungsstelle (12-20) des ortsfesten, oberen Vorderhalbstücks (7) an dessen Innenseite angeordnet sind, so daß sie einerseits unauffällig erscheinen und andererseits eine Änderung der Erscheinungsform der Brillen durch Anbindung des beweglichen, unteren Vorderhalbstücks (13) zuläßt, wobei der untere Teil der Brillengläser (2, 3) nur bei Verlängerung des oberen, ortsfesten Vorderhalbstücks (7) betont wird, wobei die Befestigungsstellen (14 und 15) und der entsprechende Bereich der Nase (20) des unteren Vorderhalbstücks (13) hinter den entsprechenden Teilen des ortsfesten oberen Vorderhalbstücks (7) bedeckt sind.

8. Brille nach Anspruch 1, **dadurch gekennzeichnet, daß** die Befestigungsstellen des beweglichen unteren Vorderhalbstücks (13) bezüglich des ortsfesten oberen Vorderhalbstücks (7) jeweils durch kreisförmige Löcher und durch Vorsprünge gebildet sind, die derart dimensioniert sind, daß ein elastisches Einrasten knopfdruckartig zugelassen wird.

## Claims

1. Spectacles consisting of two lenses (2 and 3) supported by a base frame (4) comprising two sides (5, 6) interconnected by a front, in the centre of which a nose bridge (8) is formed, and having means for changing the appearance of the frame which consist of at least one removable lower half -front (13) having different shapes, chosen by the user from a predetermined range, and adapted to fit the same base frame, the said half front (13) having two lateral fixing points (14 and 15), consisting on the one hand of two apertures formed in the longitudinal direction (LL'), at the two free ends of the said half front (13), and on the other hand of two corresponding pins formed at the ends (18 and 19) of the fixed upper half front (7), so as to ensure ret ention in the longitudinal (LL') and transverse (11') directions.

2. Spectacles according to Claim 1, **characterized in that** the apertures (14 and 15) formed at the free ends of the said removable lower half front (13) consist of two open notches which are engaged with the two corresponding pins (16 and 17) of the fixed upper half front (7) by the application, in the first place, of manual compression to the removable lower half front (13) by the elastic deformation of this half front in the longitudinal direction (LL'), in such a way as to enable the pins (16 and 17) to be introduced into the apertures (14 and 15), and then by the expansion of the said lower half front (13) when the force is removed, resulting in the effective locking of the pins (16 and 17) in the bases of the apertures (14 and 15) by elastic return.

3. Spectacles according to Claim 2, **characterized in that** each of the pins (16 and 17) formed on the ends (18 and 19) of the fixed upper half front (7) is flared at its free end so as to form a peripheral bead (16a, 17a) to retain the removable half front (13) in the direction of the depth (PP'), the height (h) of the said notches (14 and 15) being substantially equal to the shank diameter (16b, 17b) of the corresponding pins (16 and 17).

4. Spectacles according to either one of Claims 2 and 3, **characterized in that** each of the notches (14 and 15) of the removable lower half front (13) is delimited by an upper shoulder (14a, 15a) and a lower shoulder (14b, 15b) which are parallel to each other, th e lower shoulder (14b, 15b) being longer than the upper shoulder (14a, 15a) so as to form a positioning stop member in the transverse direction (11') during assembly.

5. Spectacles according to any one of Claims 1 to 4, **characterized in that** the removable lower half front (13) additionally comprises a third fixing point (20) formed in its central part at the position of the nose (8) and consisting of a notch open in the transverse direction (11') of the said removable lower half front (13) and having dimensions such that it can interact in the manner of a fork with a central pin (12) perpendicular to the upper half front (7).

6. Spectacles according to Claim 5, **characterized in that** the central pin (12) consists of a base on which is fixed a pad support arch (11) which can be adjusted to fit a user's nose, in such a way that the central notch (20) of the removable lower half front (13) is retained on the base (12) both in the longitudinal direction (LL') and in the direction of the depth (PP').

7. Spectacles according to any one of Claims 1 to 6, **characterized in that** the lateral fixing points (14 -16, 15-17) and/or central fixing points (12 -20) of the fixed upper half front (7) are positioned on the inner face (7a) of the latter, in such a way that, on the one hand, they are made unobtrusive, and, on the other hand, the appearance of the said spectacles can be changed by the addition of the said removable lower front (13) to lie under the lower part of the lenses (2, 3) only in the extension of the fixed upper half front (7), the fixing points (14 and 15) and the nose area (20) of the lower half front (13) being concealed behind the corresponding parts of the fixed upper half front (7).

8. Spectacles according to Claim 1, **characterized in that** the points for fixing the removable lower half front (13) to the fixed upper half front (7) consist, respectively, of circular holes and pins whose dimensions are such as to permit resilient snap -fitting in the manner of press-studs.
